# EUROPÄISCHE PATENTANMELDUNG

(11) **EP 4 641 895 A1**
(43) Veröffentlichungstag der Anmeldung: **29.10.2025**
(21) Anmeldenummer: 24171631.5
(22) Anmeldetag: 22.04.2024
(51) Int. Cl.: H02K 15/03, H02K 15/12, H02K 1/276, H02K 1/278

(54) **VERFAHREN ZUR FIXIERUNG VON PERMANENTMAGNETEN IN ROTOREN PERMANENTERREGTER SYNCHRONMASCHINEN DURCH ROLLTAUCHEN**

(71) Anmelder: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Schirm, Dieter, 96149 Breitengüßbach (DE); Warmuth, Matthias, 97618 Windshausen (DE)
(74) Vertreter: Siemens Patent Attorneys

(57) **Zusammenfassung**

Die Erfindung betrifft Verfahren zur Fixierung von Permanentmagneten (9) in Rotoren (4) permanenterregter Synchronmaschinen mittels Rolltauchen durch folgende Schritte:
- Paketieren (30) eines Blechpaketes (6) des Rotors (4),
- Drehfestes Verbinden des Blechpaketes (6) mit einer Welle (8),
- Axiales Einsetzen von Permanentmagneten (9) in im Wesentlichen axial verlaufenden Ausnehmungen (11) des Blechpakets (6),
- das mit Permanentmagneten (9) bestückte Blechpaket (6) wird unter Rotation um seine Achse (7) in ein einkomponentiges Harzbad (16) eingetaucht, so dass sich das Harz bzw. Kleber (47) gleichmäßig in Klebespalte (18,20) zwischen Permanentmagnet (9) und Innenseite der Tasche (12) verteilt, als auch zwischen die Bleche im radial äußeren Bereich des Blechpakets,
- danach wird der Rotor (4) aus dem Harzbad (16) herausgefahren, wobei die Rotation weiterhin mit gleicher oder anderer Drehzahl eine vorgegebene Zeit auch außerhalb des Harzbades (16) erfolgt, bis das überschüssige Harz (47) abgetropft ist und der Gelierprozess abgeschlossen ist.

## Beschreibung

Die Erfindung betrifft ein Verfahren zur Herstellung eines Rotors einer permanenterregten dynamoelektrischen Maschine, einen damit hergestellten Rotor, eine permanenterregte dynamoelektrische Maschine mit einem derartigen Rotor, als auch eine Verwendung einer permanenterregten dynamoelektrischen Maschine.

Niederspannungsmotoren im industriellen Umfeld (<1000V Nennspannung) vor allem in Wirkungsgradklassen IE4 und höher, werden üblicherweise mit Permanentmagnet bestückten Rotoren gefertigt. Dabei werden die Permanentmagnete in die hierfür vorgesehen Taschen des Blechpakets des Rotors eingebracht (sogenannte vergrabene Permanentmagnete). Die geometrischen Abmessungen dieser Taschen weisen hierbei gegenüber den Permanentmagneten ein Übermaß auf, um das axiale Einbringen der Permanentmagnete in die Taschen zu ermöglichen.

Nach dem Einbringen der Permanentmagnete in die Taschen müssen diese Permanentmagnete mit dem Blechpaket des Rotors fixiert werden. Damit soll ein Spiel der Permanentmagnete in den Taschen vermieden werden, dass bei mechanischen Einwirkungen wie Vibrationen, Fliehkräften während des Betriebs der permanenterregten dynamoelektrischen Maschine oder aufgrund von Magnetkräften u.a. eine Positionsänderung oder gar einen Bruch der Permanentmagnete verursacht.

Es gibt eine Vielzahl an Methoden Permanentmagnete in ihrer Tasche zu verkleben.

Üblicherweise werden die Permanentmagnete hierfür mittels eines reaktiven Kunststoffklebers in die Taschen geklebt. Hierfür gibt es mehrere üblicherweise angewandte Vorgehensweisen.

Eine Möglichkeit ist das vorherige Einbringen eines pastösen Klebstoffes in die Tasche, welcher dann durch den später eingeschobenen Permanentmagneten derart verdrängt wird, dass dieser sich um den Permanentmagneten schmiegt. Dieses Einsetzen der Permanentmagnete in das pastöse Material führt allerdings zu einer gewissen Positionsungenauigkeit, da sich die verdrängte Paste nicht gleichmäßig um den Permanentmagneten schmiegt und sich somit nur punktuelle Verklebungen einstellen. Das Handling der aufmagnetisierten Permanentmagnete ist dabei nicht trivial und kann aufgrund der Magnetkräfte nicht ordentlich, in der wünschenswerten Weise, durchgeführt werden. Außerdem muss nach jedem Magneteinschub das Werkzeug einer Hilfsvorrichtung von der voreingebrachten Klebe-Paste gereinigt werden.

Eine weitere Möglichkeit die Permanentmagnete in der Tasche zu fixieren, besteht darin die Permanentmagnete vorab in die Tasche einzuschieben. Danach wird Kleber auf die obere Stirnseite des bestückten Blechpakets aufgebracht, der nach einer bestimmten Zeit in den Klebespalt zwischen Permanentmagnet und Tascheninnenseite einsickert.

Eine weitere Möglichkeit die Permanentmagnete in der Tasche zu fixieren ist das spätere Vergießen der mit den Permanentmagneten bestückten Taschen mittels eines reaktiven Harzes, welches im Anschluss durch thermische Einwirkung (mittels eines Ofens, z.B. durch Temperatureinwirkung von 140°C für 2 Stunden) gehärtet werden muss. Dabei ist das Aufheizen und Abkühlen des gesamten Rotors ein zeit- und kostspieliger Prozessschritt.

Des Weiteren können jedoch derartige Temperaturen während der Einwirkzeit zu einer Teilentmagnetisierung der Permanentmagnete führen, was die Leistungsfähigkeit der permanenterregten dynamoelektrischen Maschine nachhaltig beeinträchtigt.

Die Einzelbleche des Rotorblechpakets liegen aneinander. Dabei liegen die einzelnen Bleche jedoch nicht dicht aneinander, sondern haben jeweils einen Mikrospalt, der eine hohe Kapillarwirkung aufweist. Dies wirkt sich extrem nachteilig für einen Klebeprozess aus, der axial ausgeführt wird, da der Kleber während des Klebevorgangs aus dem Klebespalt in die Zwischenräume der Bleche kapilliert und die Verklebung aufgrund von Mangel an Kleber im Klebespalt zwischen Magnet und Blech negativ beeinflusst wird.

Mit anderen Worten: dieser Kleber fehlt dann im Klebespalt.

Des Weiteren ist es dabei notwendig das Bauteil im Vorfeld adäquat abzudichten, um zu verhindern, dass das flüssige Reaktivharz aus den dafür vorgesehen Bereichen austreten kann. Dies ist zum einen an den Stirnseiten des Rotorblechpaketes notwendig, aber auch auf der außenliegenden Mantelfläche des Rotors, da es vor allem in Bereichen dünner Wandungen (<1mm) die für den optimalen magnetischen Fluss notwendig sind, zum Durchdringen der Einzelbleche kommt. Dies führt somit zu Verunreinigung und Tropfnasenbildung auf der äußeren Mantelfläche des Rotors.

Um zu verhindern, dass in einem nachgelagerten Prozessschritt diese Flächen aufwändig gereinigt und nachbearbeitet werden müssen, wird im Vorfeld die Mantelfläche des Rotors durch einen Lackiervorgang versiegelt. Hierbei wird ebenfalls ein hochtemperaturhärtender Lack verwendet, was zu einem zusätzlichen Prozessschritt und einem weiteren Aufheiz- und Abkühlzyklus führt.

Die Nachteile bei den genannten Methoden sind somit:
Der Kleber kapilliert auch zwischen die Bleche und saugt sozusagen Kleber aus dem Klebespalt, so dass die Verklebung zwischen Permanentmagnet und Tascheninnenseite nicht ausreichend ist. Der Kleber läuft undefiniert in Freiräume der Bleche oder tritt am Außendurchmesser aus und verunreinigt die Oberfläche des Rotors, was ein zusätzliches Abdichten erforderlich macht. Das undefinierte Einlaufen des Klebers führt auch zu erhöhter Unwucht des Rotors im Betrieb.

Um der Problematik des "Absaugens" von Kleber aus dem Klebespalt durch Kapillare zwischen den Blechen zu vermeiden, könnte ein Vollverguss unter Vakuum stattfinden oder eine Vorab-Beaufschlagung der Tascheninnenwände mit einem Aktivator, um die Reaktionsgeschwindigkeit des Klebers zu erhöhen und somit das Kapillieren des Klebers in die Zwischenräume der Bleche zu reduzieren.

Diese Verfahren sind jedoch vergleichsweise komplex und nur mit hohen Prozesszeiten umzusetzen, was die Herstellung eines Rotors verteuert.

Ausgehend davon liegt der Erfindung die Aufgabe zugrunde ein einfaches Verfahren zur Herstellung eines Rotors einer permanenterregten dynamoelektrischen Maschine bereitzustellen, das vergleichsweise wenig Prozessschritte und weniger aufwändige Prozessschritte erfordert. Der damit hergestellte Rotor soll bei einer permanenterregten dynamoelektrischen Maschine die erforderliche Wirkungsgradklasse einhalten und damit für die Verwendungsfälle der permanenterregten dynamoelektrischen Maschine vergleichsweise günstige Verbrauchsdaten liefern.

Die Lösung der gestellten Aufgabe gelingt durch die Merkmalskombination der unabhängigen Ansprüche.

Vorteilhafte Ausgestaltungen der Erfindung sind den davon abhängigen Ansprüchen zu entnehmen.

Bei dem erfindungsgemäßen Verfahren zur Fixierung von Permanentmagneten in Rotoren permanenterregter Synchronmaschinen mittels Rolltauchen werden folgende Schritte vollzogen:
Zunächst wird ein Blechpaket des Rotors paketiert, aus Einzelblechen oder aus Teilblechpaketen, die jeweils ebenfalls aus Einzelblechen gebildet wurden. Die Teilblechpakete können, umfänglich betrachtet, um einen vorgebbaren Winkel zum vorigen Teilblechpaket auf einer Welle versetzt angeordnet werden.

Danach schließt sich ein axiales Einsetzen der Permanentmagneten in im Wesentlichen axial verlaufenden Ausnehmungen des Blechpakets bzw. der Teilblechpakete an. Dabei werden die Permanentmagnete bevorzugt an der Außenseite der Taschen eingesetzt, sodass ein Klebespalt zur Außenseite geringer ist als zur Innenseite der Tasche.

Es folgt ein drehfestes Anordnen des Blechpaketes oder dem aus Teilblechpaketen gebildeten Blechpakets auf einer Welle.

Das mit Permanentmagneten bestückte Blechpaket oder Teilblechpaket des Rotors wird unter einer vorgegebenen Rotation in ein vorzugsweise einkomponentiges Harzbad (1K) eingetaucht, so dass sich das Harz gleichmäßig in die Klebespalte zwischen Permanentmagnete und Tascheninnenseiten (Außenseite und Innenseite) als auch, in Abhängigkeit von der Eintauchtiefe, zwischen den Blechen am radial äußeren Rand verteilt,

Dieses Rolltauchverfahren dient somit auch dazu, die radial äußeren Bereiche des Blechpakets zu verkleben.

Nach einer vorgegebenen Rollierzeit wird das Blechpaket des Rotors oder das Teilblechpaket aus dem Harzbad herausgenommen, wobei die Rotation weiterhin mit gleicher oder anderer Drehzahl eine vorgegebene Zeit auch außerhalb des Harzbades erfolgen kann, bis das überschüssige Harz abgetropft ist und der Gelierprozess abgeschlossen ist.

Optional können die Teilblechpakete auch mittels einer Hilfswelle das erfindungsgemäße Rolltauchverfahren durchlaufen und erst danach axial hintereinander, insbesondere um einen vorgebbaren Winkel umfänglich versetzt auf der Welle drehfest positioniert werden.

Somit kapilliert das Harz bzw. der Kleber im Wesentlichen nur im eingetauchten Bereich auch zwischen die Einzelbleche und verklebt diese in diesem Bereich. Somit ist keine Aufspreizung der radial äußeren Bereiche der Bleche im Betrieb der dynamoelektrischen Maschine möglich. Die Verklebung der Permanentmagnete in den Taschen, bzw. Ausnehmungen erfolgt über das Eintauchen verbunden mit Kapilliereffekten, so sodass die Klebespalte um die Permanentmagnete, als auch die Flusssperren der magnetischen Pole des Rotors mit Kleber gefüllt sind.

Ausgenommen von der Füllung sind Trägheitsausnehmungen und/oder andere Bohrungen im Blechpaket.

Das Rolltauchen wird bis zu einem gesättigten Zustand durchgeführt. Dabei sind die Permanentmagnete beidseitig vollflächig verklebt. Der Klebespalt ist komplett ausgefüllt. Im radial äu-ßeren Bereich - also radial über den Permanentmagneten - sind die Kapillare zwischen den Blechen bis zu einem vorgebbaren Radius in einer Sättigung ebenfalls vollständig ausgefüllt.

Wichtige Parameter des Rolltauchens sind dabei unter anderem:
Die Viskosität des Harzes, dabei kann mit geringer Viskosität das Eindringverhalten erhöht werden. Ein bevorzugter Bereich der Viskosität liegt bei 100-500 mPa S. In Abhängigkeit dieser Parameter liegt die Rolliergeschwindigkeit im und/oder außerhalb des Harzbades bei ca. 20U/min.

Bei idealer Eintauchtiefe in das Harzbad werden die Klebespalte optimal am Permanentmagneten befüllt. Bevorzugt ist eine Verklebung der Klebespalte der Permanentmagnete an den jeweiligen Taschenränder und an den radial darüberliegenden Kapillaren der Bleche. Radial innerhalb der Taschen wird keine Verklebung der Bleche angestrebt, um den Materialverbrauch gering zu halten. Es wird eine möglichst geringe Tauchzeit für die komplette Klebespaltfüllung angestrebt, um die Taktzeiten zu minimieren. Eine minimierte Gelierzeit reduziert dabei die Taktzeit. Mit einem vorgewärmten Rotor kann dabei beispielsweise die Gelierzeit bis zu 80 % reduziert werden. Mit einer Erwärmung des Rotors erhöht sich die Viskosität des Harzes und reduziert dabei die Gelierzeit. Bevorzugt ist dabei eine Objekttemperatur im Bereich von ca. 40 - 80°C.

Auch über die Harzbadtemperatur kann die Viskosität und damit die Geschwindigkeit des Kapillierens beeinflusst werden. Mit diesen Parametern ist man nun im Fertigungsprozess relativ flexibel in den Einstellmöglichkeiten, um die Kapilliergeschwindigkeit, das Abtropfverhalten und die Taktzeiten optimal zu gestalten.

Ausnehmung im Blechpaket des Rotors sind dabei Ausstanzungen in den Einzelblechen, die paketiert zu einem Blechpaket oder Teilblechpaket, axial hintereinander angeordnet sind. Die Ausnehmungen weisen sowohl Taschen als auch die Flusssperren auf. An den Seiten der Taschen sind üblicherweise Flusssperren vorgesehen, die den magnetischen Fluss im Rotorblech positiv beeinflussen bzw. in seinem Verlauf beeinflussen. Die Taschen sind zur Aufnahme der oder des Permanentmagneten vorgesehen.

Insbesondere die Taschen sind in den Abmessungen im Bereich 0,1-0,2 mm höher gestaltet, damit der Permanentmagnet axial leicht eingeschoben werden kann.

Durch die Gestaltung der Ausnehmung bzw. der Tasche kann erreicht werden, dass generell der Magnet an der radial außenliegenden Taschenwand anliegt. Dies bietet den Vorteil, dass eine gleichmäßige Verklebung an der Außenseite und Innenseite gewährleistet ist.

In den Raum der Ausnehmungen ragen optional Haltelemente, wie Haltenasen zur ergänzenden Fixierung und Halterung der Permanentmagnete zumindest während der Fertigung und/oder im Betrieb der dynamoelektrischen Maschine u.a. gegenüber Fliehkraftbeanspruchungen.

Üblicherweise werden einzelne Teilblechpakete bzw. Rotorpaketmodule in der axialen Ausdehnung des Permanentmagneten hergestellt, die in bestimmter Anzahl anschließend dann auf der Welle zu einem gesamten Rotorpaket aufgepresst werden.

Mit anderen Worten - die axiale Ausdehnung eines Blechpakets oder eines Teilblechpakets entspricht vorteilhafterweise dem ganzzahligen Vielfachen einer axialen Ausdehnung eines Permanentmagneten.

Zur Beschleunigung des Aushärtens im Anschluss an das Rolltauchen des Blechpakets des Rotors wird dieses einem thermischen Prozess unterzogen wird, dessen Temperatur unter der Grenztemperatur der Permanentmagnete liegt. Als Grenztemperatur der Permanentmagnete wird dabei die Temperatur verstanden, ab der eine irreversible Entmagnetisierung der Permanentmagneten auftritt.

Die maximale Eintauchtiefe des Blechpakets in das Harzbad orientiert sich an der Ausgestaltung der magnetischen Pole des Rotors und beträgt maximal den radial am weitesten innen liegenden Teil der Ausnehmungen eines magnetischen Pols, ohne jedoch weitere Öffnungen des Blechpakts zu befüllen, wie z.B. die Trägheitsausnehmungen.

Die dementsprechend minimale Eintauchtiefe des Blechpakets im Harzbad liegt im Bereich 1 - 3 mm radial innerhalb des äußersten Bereichs einer Ausnehmung, also z.B. einer Flusssperre, um nur im erforderlichen Bereich des Blechpakets eine Beaufschlagung mit Harz zu erzielen. Über Kapilliereffekte der Klebespalte um die Permanentmagnete werden dann auch ggf. weitere Flusssperren der magnetischen Pole des Rotors mit Kleber gefüllt.

Die Viskosität des Harzes liegt vorzugsweise im Bereich bis zu 2000 mPaS, vorzugsweise von 100 - 500 mPaS, da dort - wie Versuche gezeigt haben - die besten Ergebnisse erzielt wurden.

Diese Verklebung kann sowohl für vorgefertigte Teilpakete, die erst nach dem Verkleben auf einer Welle positioniert werden, als auch für das gesamte Blechpaket, das bereits auf die Rotorwelle gefügt ist, angewendet werden.

Die Blechpaketierung des gesamten Blechpakets und/oder der Teilblechpakete erfolgt mittels Schweißung, Verklebung (Punktverklebung oder Vollflächige Verklebung) der jeweiligen Einzelbleche oder Stanzpaketierung der Einzelbleche.

Um das Verfahren zu beschleunigen kann das Aushärten des Klebers/Harzes im Blechpaket im Anschluss an das Rolltauchen in einem Ofen oder bereits während der Gelierphase mittel Wärmestrahlung oder Induktionserwärmung erfolgen.

Um die Kapillarwirkung vor allem in den Klebespalten und den vorgegebenen Bereichen der Bleche noch zu steigern bzw. zu beschleunigen kann das mit Permanentmagneten versehene Blechpaket oder Teilblechpaket während des Rolltauchens in axiale und/oder umfängliche Schwingungen versetzt werden.

Eine Temperierung der Blechpakete und/oder des Harzbades kann zur Optimierung des Klebeprozesses angewandt werden. Der Rotor kann dabei auf ca. 40 - 80°C erwärmt werden, während das Harzbad ungefähr eine Temperatur von ca. 40°C aufweist.

Am Ende des Rolltauchens (das Blechpaket des Rotors wird aus Harzbad herausgefahren) kann bei Bedarf ein Abstreifen am Außenumfang des Blechpakets oder Teilblechpakets erfolgen, um eine möglichst dünne Schicht an der Oberfläche zu erhalten. Danach folgt der Gelierprozess.

Ein erfindungsgemäß hergestellter Rotor einer permanenterregten Synchronmaschine mit vergrabenen Permanentmagneten minimiert die Gefahr einer Rissbildung in der Verklebung während der Rotormontage, da das Blechpaket bzw. die Teilblechpakete bereits vor dem Klebevorgang auf die Welle aufgepresst werden kann.

Durch die Gestaltung der Ausnehmung bzw. der Tasche kann erreicht werden, dass generell der Permanentmagnet an der radial außenliegenden Taschenwand anliegt, die der Oberfläche des Rotors zugewandt ist. Dies bietet den Vorteil, dass eine gleichmäßige Verklebung an der Außenseite und Innenseite der Tasche gewährleistet ist. Im Motorbetreib erfährt dadurch der Permanentmagnete bei vorhandener Fliehkraft eine sichere Abstützung in den Ausnehmungen, insbesondere den Taschen des Blechpakets.

Durch die Teilblechpakete des Rotors ist - axial betrachtet - eine Staffelung der magnetischen Pole möglich, was u.a. die Drehmomentwelligkeit einer permanenterregten Synchronmaschine reduziert.

Dadurch, dass die Bleche des Blechpakets des Rotors vor allem im Außenbereich, also dem Luftspalt zugewandten Bereich, zusätzlich miteinander verklebt, werden Schwingungen des Rotors im Betrieb der Synchronmaschine reduziert.

Dies ist besonders vorteilhaft bei den dabei angedachten Anwendungen der permanenterregten Synchronmaschine, wie z.B. bei Kompressoren, Lüfter, Verdichter, Pumpen sowie Anwendungen in der Fördertechnik.

Die Erfindung sowie weitere vorteilhafte Ausgestaltungen der Erfindung werden anhand prinzipiell dargestellter Ausführungsbeispiele näher erläutert, darin zeigen:
- FIG 1: einen Längsschnitt einer prinzipiell dargestellten dynamoelektrischen Maschine,
- FIG 2,3: prinzipielle Darstellungen von Blechpaketen im Harzbad,
- FIG 4: Querschnitt eines Rotors,
- FIG 5: Detailansicht eines Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen im allgemeinen Beschreibungsteil als auch in der konkreten Figurenbeschreibung können beliebig kombiniert werden. Ebenso sind auch die dort erwähnten Einzelmerkmale der jeweiligen Ausführungen kombinierbar, ohne das Wesen der Erfindung zu verlassen.

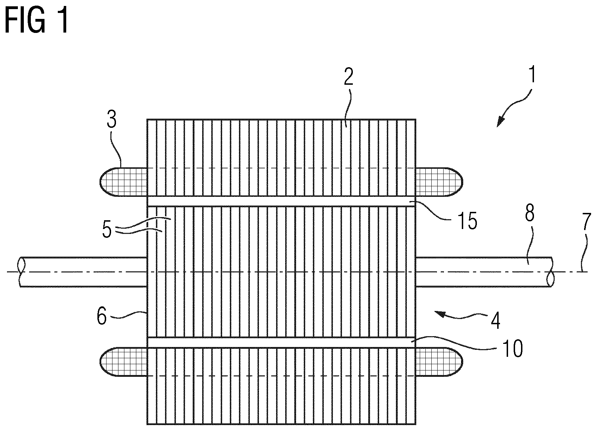

FIG 1 zeigt in einer prinzipiellen Längsdarstellung eine dynamoelektrische Maschine 1, in diesem Fall eine permanenterregte Synchronmaschine. Diese permanenterregte Synchronmaschine weist einen Stator 2 auf, der in nicht näher dargestellten Nuten ein Wicklungssystem aufweist, das an den Stirnseiten des Stators 2 einen Wickelkopf 3 ausbildet. Durch elektromagnetische Wechselwirkung über einen Luftspalt 15 wird durch ein bestromtes Wicklungssystem ein Rotor 4 in Rotation um eine Achse 7 versetzt. Der Rotor 4, der koaxial zum Stator 2 angeordnet ist, weist in axial verlaufenden Ausnehmungen 11 angeordnete Permanentmagnete 9 auf, die auch als vergrabene Permanentmagnete 9 bezeichnet werden. Die Bleche 5 des Rotors 4 sind als Blechpaket 6 paketiert und mit einer Welle 8 drehfest verbunden.

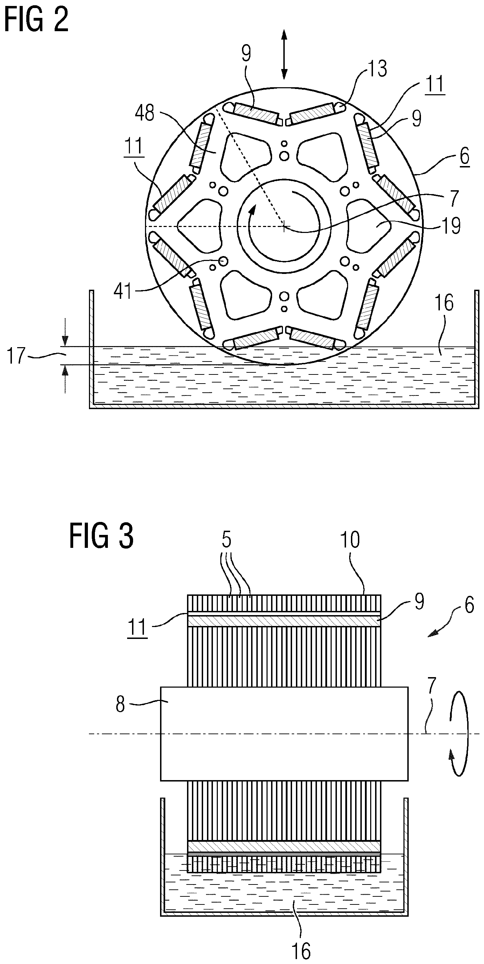

FIG 2 zeigt ein Blechpaket 6 in einer Seitenansicht, das unter einer vorgegebenen Rotation in ein Harzbad 16 eingefahren wird. Die Permanentmagnete 9 eines magnetischen Pols 48 sind in Ausnehmungen 11 des Blechpakets 6 V-förmig angeordnet.

Die Ausnehmungen 11 im Blechpaket 6 des Rotors 4 sind dabei Ausstanzungen in den Einzelblechen 5, die paketiert zu einem Blechpaket 6 oder Teilblechpaket 42, axial hintereinander angeordnet sind. Die Ausnehmungen 11 weisen sowohl Taschen 12 als auch die Flusssperren 13 auf. An den Seiten der Taschen 12 sind üblicherweise diese Flusssperren 13 vorgesehen, die den magnetischen Fluss im Blech positiv beeinflussen bzw. in seinem Verlauf beeinflussen. Die Taschen 12 sind zur Aufnahme der oder des Permanentmagneten 9 vorgesehen.

Insbesondere die Taschen 12 sind in den Abmessungen im Bereich 0,1-0,2 mm höher gestaltet, damit der Permanentmagnet 9 axial leichter eingeschoben werden kann.

Durch die Gestaltung der Ausnehmung 11 bzw. der Tasche 12 kann erreicht werden, dass generell der Permanentmagnet 9 an der radial außenliegenden Taschenwand anliegt. Beim Einschieben werden die Permanentmagnete 9 an der Außenwand der Tasche 12 streifend angesetzt und eingeschoben. Durch die Magnetkraft ist damit gewährleistet, dass die Permanentmagnete 9 u.a. im weiteren Fertigungsprozess außen anliegend an der Tasche 12 verbleiben. Dies bietet den Vorteil, dass eine gleichmäßige Verklebung des Permanentmagneten 9 an der Außenseite und Innenseite der Tasche 12 gewährleistet ist.

Ausstanzungen der einzelnen Bleche 5 bilden, in einem Blechpaket 6 paketiert, die im Wesentlichen axial verlaufenden Ausnehmungen 11. Die Ausnehmungen 11 des Blechpakets 6 verlaufen dabei entweder achsparallel, geschrägt oder gestaffelt.

Bei einer achsparallelen Anordnung fluchten die Ausnehmungen 11. Bei einer geschrägten Anordnung, ist jedes Blech 5 gegenüber dem axial nachfolgenden Blech 5 um einen vorgebbaren Winkel umfänglich versetzt angeordnet.

Umfänglich versetzt, axial angeordnete Teilblechpakete 42 bilden ein gestaffeltes Blechpaket 6.

Unabhängig von der Gestaltung des Blechpakets 6 (gerade, geschrägt, gestaffelt) ist immer, dass der Kleber 47 oder das Harz durch die Flusssperren 13 eines Pols 48 und/oder die oben erwähnten Spalte 18,20 einer Ausnehmung 11 dringen kann und die Hohlräume eines magnetischen Pols 48 füllen kann.

Die Ausnehmungen 11 weisen sowohl Taschen 12 als auch die Flusssperren 13 auf. Die Taschen 12 sind zur Aufnahme der oder des Permanentmagneten 9 vorgesehen und bilden zur Innenseite der Tasche 12 innere Spalte 20 und äußere Spalte 18. In den Raum der Ausnehmungen 11 ragen Haltenasen 49 und Halteelemente 46 u.a. zur ergänzenden Fixierung und Halterung der Permanentmagnete 9 während der Fertigung und im Betrieb der dynamoelektrischen Maschine 1 gegenüber Fliehkraftbeanspruchungen.

Idealerweise sind die Permanentmagnete 9 ohne Spalte zu den Blechen 8 in den Ausnehmungen 18 platziert - bilden also eine lückenlose und vollflächige Anlage. Eine derartige komplementäre Anordnung ist aber aus fertigungstechnischen Gründen nicht möglich. Es entstehen fertigungsbedingt diese axial verlaufenden Spalte 18, 20 in den Taschen 12 zwischen den Permanentmagneten 9 und den Blechen 5, die geschlossen werden müssen.

Ein Paketieren der Bleche 5 zu einem Blechpaket 6 oder zu einem Teilblechpaket 42 kann für die Fertigung auch optional auf einer Hilfswelle erfolgen. Ebenso ist es möglich diese Bleche 5 zu verkleben. Ebenso ist Stanzpaketieren der Bleche 5 möglich, um ein Blechpaket 6 oder ein Teilblechpaket 42 zu erhalten, in das die Permanentmagnete 9 einsetzbar sind.

Optional zusätzliches Paketieren erfolgt dann, wenn sich das Blechpaket 6 auf der eigentlichen Welle 8 befindet. Dabei wird das Blechpaket 6 mittels zweier Scheiben, beispielweise Endscheiben, zusammengepresst.

Das Blechpaket 6, werden vorzugsweise auf die Welle 8 zur Drehmomentenübertragung geschrumpft oder kalt gepresst.

Ebenso sind andere Möglichkeiten vorhanden, das Drehmoment vom Blechpaket 6 auf die Welle 8 zu übertragen, wie Passfederverbindungen etc. Eine Paketierung des Blechpakets 6 kann auch über achsparallele Zugankerverbindungen erfolgen, die dann vorzugsweise radial innerhalb der Endscheiben angeordnet sind.

Der Prozess des Vergießens der Permanentmagnete 9 in den Ausnehmungen 11 kann also nahezu bei Raumtemperatur erfolgen, was den Prozess vereinfacht und ein nahezu zeitlich nahtloses Weiterverarbeiten des Rotors 4 ermöglicht.

Die Trägheitsöffnungen 45 werden nicht mit Harz 47 gefüllt.

Die magnetischen Pole 48 werden gemäß FIG 2 durch zwei V-förmig angeordnete Ausnehmungen 11 gebildet, in die Permanentmagnete 9 eingesetzt sind. Die magnetischen Pole 48 des Rotors 4 können ebenso aus mehreren Permanentmagneten 9 gebildet sein, beispielsweise aus Doppel-V-förmigen Anordnungen, aus U-förmigen Anordnungen oder W-förmigen Anordnungen oder auch nur aus tangential angeordneten Permanentmagneten 9. Auch in axialer Richtung sind je nach axialer Länge des Blechpakets 6 Rotors 4 mehrere Permanentmagnete 9 pro Ausnehmung 11 vorgesehen. Dies ist insbesondere bei Aufbau des Blechpakets 6 durch Teilblechpakete 42 erforderlich.

Bei einem Verfahren zur Herstellung des Rotors 4, insbesondere der permanenterregten Synchronmaschine 1, werden somit folgendermaßen vorgegangen.

Das Verfahren ist für alle Arten der Blech-Paketierung 30 möglich, da die anschließende Beaufschlagung mit Harz 47 überwiegend über die Flusssperren 13 der Ausnehmungen 11 erfolgt. Es werden somit zunächst Blechpakete 6 bzw. Teilblechpakete 42 aus Einzelblechen 5 paketiert. Dabei werden diese Bleche 5, insbesondere stanzpaketiert. Das Blechpaket 6 bzw. Teilblechpaket 42 aber ebenso geschweißte oder verklebte (als Punktverklebung oder vollflächige Verklebung benachbarter Einzelbleche) Bleche 5 aufweisen. Die im Wesentlichen axial verlaufenden Ausnehmungen 11 im Blechpaket 6 oder Teilblechpaket 42 zur Aufnahme der Permanentmagnete 9, wurden vorab aus den Einzelblechen 5 gestanzt. Dabei weisen die Ausnehmungen 11, Taschen 12 und Flusssperren 13 auf. Die Blechpakete 6 oder Teilblechpakete 42 sind dabei schon auf einer Welle 8 oder Hilfswelle positioniert.

Es folgt das axiale Einsetzen der Permanentmagnete 9 in die Taschen 12 der Ausnehmungen 11 des Blechpakets 6 oder der Teilblechpakete 42.

Die mit Permanentmagneten 9 versehenen Blechpakete 6 bzw. Teilblechpakete 42 werden mittels erfindungsgemäßem Rolltauchen dieser Blechpakete 6 oder dieser Teilblechpakete 42 um ihre Achse 7 in das Harzbad 16 gelassen. Die Viskosität des Harzes liegt vorzugsweise im Bereich bis zu 2000 mPaS, vorzugsweise von 100 - 500 mPaS. Die Blechpakete 6 bzw. Teilblechpakete 42 rollieren erst im Harzbad 16, wenn sie dort die angestrebte Eintauchtiefe 17 erreicht haben. Der Kleber 47 tritt über die Flusssperren 13 und/oder die Spalte 18, 20 zwischen Permanentmagnet 9 und Blechinnenseite der Tasche 12 ein. Aufgrund der geringeren Viskosität verteilt sich der Kleber 47 in den Flusssperren 13 bzw. Spalte 18, 20 zwischen Permanentmagneten 9 und Innenseite des Taschen 12 des Blechpakets 6 oder der Teilblechpakete 42 des Rotors 5.

Idealerweise ist die Eintauchtiefe 17 im Bereich von 1 - 3 mm radial innerhalb des Steges 14 der insbesondere äußeren Flusssperre 13, um nur im erforderlichen Bereich eine Beaufschlagung mit Harz zu erzielen.

Dabei kapilliert das Harz 47 im eingetauchten Bereich auch zwischen die Einzelbleche 5 und verklebt diese. Das Rolltauchen wird bis zu einem gesättigten Zustand durchgeführt.

Um die Kapillarwirkung zwischen den Einzelblechen 5 vor allem im Bereich der Eintauchtiefe 17 und/oder im Bereich der Klebespalte 18, 20 noch zu steigern bzw. zu beschleunigen, kann das Blechpaket 6 oder das Teilblechpaket 42 während des Rolltauchens in axiale und/oder umfängliche Schwingungen versetzt werden.

Die maximale Eintauchtiefe 45 richtet sich nach den nicht zu benetzenden Aussparungen 41 und Trägheitsöffnungen 19. Ein vorzeitiges Rollieren vor dem Einfahren ist jedoch auch möglich.

Nach einer vorgegebenen Zeit im Harzbad 16 werden die Blechpakete 6 bzw. Teilblechpakete 42 aus dem Harzbad 16 herausgefahren. Die Rotation erfolgt weiterhin mit gleicher oder anderer Drehzahl auch außerhalb, bis das überschüssige Harz 47 abgetropft ist und der Gelierprozess abgeschlossen ist. Diese andere Drehzahl kann auch ein modulierendes Geschwindigkeitsprofil aufweisen.

Am Ende des Rolltauchens wird das Blechpaket 6 oder das Teilblechpaket 42 aus dem Harzbad 16 herausgefahren und kann bei Bedarf auch - optional zusätzliches - Abstreifen am Außendurchmesser erfolgen, um eine möglichst dünne Schicht von Kleber 47 an der Oberfläche 10 des Blechpakets 6 oder Teilblechpakets 42 zu erhalten. Danach folgt der Gelierprozess.

Im Anschluss kann das Blechpaket 6 bzw. Teilblechpakete 42 des Rotors 4 zur Beschleunigung des Aushärtens auch einem zusätzlichen thermischen Prozess - der unter der Grenztemperatur der Permanentmagnete 9 liegt - unterzogen werden.

Als optionaler Schritt, der vor allem für Teilblechpakete 42 vorteilhaft ist, werden die mit Permanentmagneten 9 versehenen Teilblechpakete 42, umfänglich versetzt zu einem Blechpaket 6 des Rotors 4 paketiert. Dabei werden die Teilblechpakete 42 nacheinander, um einen vorgebbaren Winkel umfänglich versetzt auf der Welle 8 jeweils drehfest angeordnet, so dass sich, axial betrachtet, ein gestaffelter Verlauf der mit Permanentmagneten 9 versehenen Taschen 12 der magnetischen Pole 48 ergibt.

Nachdem die Zuführung des Klebers 47 in die Ausnehmungen 11 vor allem über die Flusssperren 13 und ggf. über die Kapillare zwischen den Einzelblechen 5 erfolgt kann der umfängliche Versatz der Teilblechpakete 42 - also die Staffelung - vergleichsweise groß sein, da eine durchgängige axiale Zuführung des Klebers 47 in den Ausnehmungen 11 eines magnetischen Pols 48 nicht unbedingt notwendig ist.

Diese erfindungsgemäße Verklebung der Permanentmagnete 9 in einem Blechpaket 6 oder Teilblechpaket 42 kann somit sowohl für vorgefertigte Teilpakete 42 als auch für das gesamte Rotorpaket, das bereits auf die Welle 8 gefügt ist, angewendet werden.

Grundsätzlich kann auch eine Temperierung des Harzes 47, der Blechpakete 6 oder Teilblechpakete 42 etc. zur Optimierung des Klebeprozesses beitragen.

Das Aushärten des Klebers 47 kann im Anschluss auch in einem Ofen erfolgen oder bereits während der Gelierphase mittel Wärmestrahlung oder Induktionserwärmung.

Der Vorteil dieser Lösung liegt darin, dass der bereits mit Permanentmagnete 9 ausgestattete Rotor 4 verklebt wird. Es besteht keine Gefahr, dass die Klebefläche innerhalb der Ausnehmung 11 bzw. die Klebespalt 18, 20 zu gering benetzt sind. Während des Rolltauchens steht ausreichend Harz zur Verfügung, bis das System gesättigt ist.

Die weiteren Vorteile sind, dass nunmehr eine gleichmäßige Fixierung der Permanentmagnete 9 in den Taschen 12 vorliegt. Es ist außerdem eine Verklebung am gesamten Rotor 4 möglich, somit sind keine nachgeschalteten Schrumpfprozesse notwendig, wie bei den herkömmlichen Verfahren. An der Verklebung ist somit auch die Gefahr der Rissbildung ausgeschlossen. Das Verfahren eignet sich auch für höhere Temperaturen bis max. 160°C, die aber auf jeden Fall unter der Grenztemperatur der Permanentmagneten 9 liegen soll.

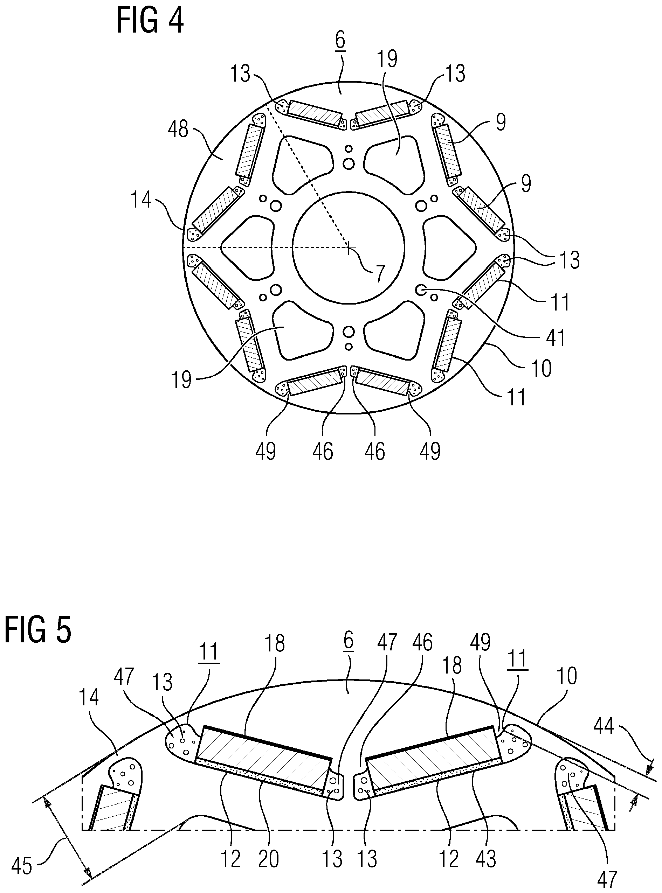

FIG 4 zeigt einen Querschnitt des mit Permanentmagneten 9 bestückten Rotors 4 dessen Pole 48 eine V-förmiger Anordnung seiner Permanentmagnete 9 aufweisen. Die Trägheitsausnehmungen 19 und Aussparungen 41 sind nicht mit Harz 47 versehen. Jedoch sind die Flusssperren 13, die Spalte 18, 20 in den Ausnehmungen 11 mit Kleber 47 gefüllt, wie dies auch der FIG 5 zu entnehmen ist. Ebenso weisen die radial äußeren Bereiche zwischen den Blechen 5 - je nach vorgegebener Eintauchtiefe 44,45 - eine zusätzliche Verklebung auf.

Die Flusssperren 13 ermöglichen ein optimales Befüllen der Klebespalte 18, 20 mit Harz 47 und sind nur während des Rolltauchens selbst mit Harz 47 befüllt. Beim Herausfahren des Blechpakets 6 aus den Harzbad 16 entleeren sich die Flusssperren 13 wieder, laufen somit leer und sind damit nach dem Rolltauchen selbst nicht mehr befüllt.

Eine permanenterregte Synchronmaschine 1 mit einem erfindungsgemäßen Rotor 4, dessen Permanentmagnete 9 vergraben angeordnet sind und mit dem erfindungsgemäßen Rollrauchverfahren fixiert sind, ist nunmehr vergleichsweise einfach herzustellen und erreicht einen vergleichsweise hohen Wirkungsgrad. Die permanenterregte Synchronmaschine 1 ist demnach für viele Arbeitsmaschinen, vor allem Maschinen im Dauerbetrieb auch unter wechselnden Belastungen, besonders geeignet. Diese fungieren beispielsweise als Antriebe von Kompressoren, Verdichtern, Lüftern und als Antriebe in der Nahrungsmittelindustrie und bei maritimen Anwendungen.

### Bezugszeichenliste

- 1: dynamoelektrische Maschine
- 2: Stator
- 3: Wickelkopf
- 4: Rotor
- 5: Bleche Rotor
- 6: Blechpaket des Rotors
- 7: Achse
- 8: Welle
- 9: Permanentmagnet
- 10: Oberfläche des Rotors
- 11: Ausnehmung
- 12: Tasche
- 13: Flusssperre
- 14: Steg
- 15: Luftspalt
- 16: Harzbad
- 17: Eintauchtiefe
- 18: äußerer Spalt
- 19: Trägheitsaussparungen
- 20: innerer Spalt
- 30: Paketieren Blechpaket
- 41: Bohrung/Aussparung
- 42: Teilblechpaket
- 43: Vergussmasse
- 44: minimale Eintauchtiefe
- 45: maximale Eintauchtiefe
- 46: Halteelement
- 47: Kleber
- 48: magnetischer Pol
- 49: Haltenasen

## Patentansprüche

1. Verfahren zur Fixierung von Permanentmagneten (9) in Rotoren (4) permanenterregter Synchronmaschinen mittels Rolltauchen durch folgende Schritte:
- Paketieren (30) eines Blechpaketes (6) des Rotors (4),
- Drehfestes Verbinden des Blechpaketes (6) mit einer Welle (8),
- Axiales Einsetzen von Permanentmagneten (9) in im Wesentlichen axial verlaufenden Ausnehmungen (11) des Blechpakets (6),
- das mit Permanentmagneten (9) bestückte Blechpaket (6) wird unter Rotation um seine Achse (7) in ein einkomponentiges Harzbad (16) eingetaucht, so dass sich das Harz bzw. Kleber (47) gleichmäßig in Klebespalte (18,20) zwischen Permanentmagnet (9) und Innenseite der Tasche (12) verteilt, als auch zwischen die Bleche im radial äußeren Bereich des Blechpakets,
- danach wird der Rotor (4) aus dem Harzbad (16) herausgefahren, wobei die Rotation weiterhin mit gleicher oder anderer Drehzahl eine vorgegebene Zeit auch außerhalb des Harzbades (16) erfolgt, bis das überschüssige Harz (47) abgetropft ist und der Gelierprozess abgeschlossen ist.

2. Verfahren zur Fixierung von Permanentmagneten (9) in Rotoren (4) permanenterregter Synchronmaschinen mittels Rolltauchen durch folgende Schritte:
- Paketieren (30) von Teilblechpaketen (42) des Rotors (4),
- Axiales Einsetzen von Permanentmagneten (9) in im Wesentlichen axial verlaufende Ausnehmungen (11) der Teilblechpakete (42),
- das mit Permanentmagneten bestückte Teilblechpaket wird unter Rotation um seine Achse in ein einkomponentiges Harzbad (16) eingetaucht, so dass sich das Harz (47) gleichmäßig in Klebespalte (18,20) zwischen Permanentmagnet (9) und Innenseite der Tasche (12) verteilt, als auch zwischen die Bleche (5) im radial äußeren Bereich des Teilblechpakets (42),
- danach wird das Teilblechpaket (42) aus dem Harzbad (16) herausgefahren, wobei die Rotation weiterhin mit gleicher oder anderer Drehzahl eine vorgegebene Zeit auch außerhalb des Harzbades (16) erfolgt, bis das überschüssige Harz (47) abgetropft ist und der Gelierprozess abgeschlossen ist,
- Drehfestes Verbinden der einzelnen Teilblechpakete (42) auf einer Welle (8), mittels axialem Paketieren zu einem Blechpaket (6).

3. Verfahren zur Fixierung von Permanentmagneten (9) in Rotoren (4) permanenterregter Synchronmaschinen nach Anspruch 1 oder 2, **dadurch gekennzeichnet, dass** im Anschluss an das Rolltauchen das Blechpaket (6) des Rotor (4) zur Beschleunigung des Aushärtens einem thermischen Prozess unterzogen wird, dessen Temperatur unter der Grenztemperatur der Permanentmagnete (9) liegt.

4. Verfahren zur Fixierung von Permanentmagneten (9) in Rotoren (4) permanenterregter Synchronmaschinen nach einem der vorhergehenden Ansprüche, **dadurch gekenn- zeichnet**, dass eine vorgebbare Eintauchtiefe (17) des Blechpakets (6) oder Teilblechpakets (42) in dem Harzbad (16) in Abhängigkeit von einer Ausgestaltung der magnetischen Pole (48) des Rotors (4) erfolgt.

5. Verfahren zur Fixierung von Permanentmagneten (9) in Rotoren (4) permanenterregter Synchronmaschinen nach einem der vorhergehenden Ansprüche, **dadurch gekenn**- **zeichnet**, dass die eine Mindest-Eintauchtiefe des Blechpakets (6) oder Teilblechpakets (42) im Harzbad (16) im Bereich 0,8 - 3 mm radial innerhalb des Steges (14) einer äußeren Flusssperre (13) liegt, also radial ca. 5 mm von der Oberfläche entfernt ist.

6. Verfahren zur Fixierung von Permanentmagneten (9) in Rotoren (4) permanenterregter Synchronmaschinen nach einem der vorhergehenden Ansprüche, **dadurch gekenn**- **zeichnet**, dass die Viskosität des Harzes (47) des Harzbades (16) vorzugsweise im Bereich bis zu 2000 mPaS, vorzugsweise von 100 - 500 mPaS liegt.

7. Verfahren zur Fixierung von Permanentmagneten (9) in Rotoren (4) permanenterregter Synchronmaschinen nach einem der vorhergehenden Ansprüche, **dadurch gekenn- zeichne**t, dass die Paketierung der Bleche (5) des Blechpakets (6) und/oder der Teilblechpakete (42) mittels Schweißung oder Verklebung (Punktverklebung oder Vollflächige Verklebung) oder Stanzpaketierung der jeweiligen Bleche erfolgt.

8. Verfahren zur Fixierung von Permanentmagneten (9) in Rotoren (4) permanenterregter Synchronmaschinen nach einem der vorhergehenden Ansprüche, **dadurch gekenn**- **zeichnet**, dass Aushärten des Klebers bzw. Harzes (47) im Blechpaket (6) oder Teilblechpaket (42) im Anschluss an das Rolltauchen in einem Ofen oder bereits während der Gelierphase mittel Wärmestrahlung oder Induktionserwärmung erfolgt.

9. Verfahren zur Fixierung von Permanentmagneten (9) in Rotoren (4) permanenterregter Synchronmaschinen nach einem der vorhergehenden Ansprüche, **dadurch gekenn**- **zeichnet**, dass das Blechpaket (6) oder das Teilblechpaket (42) während des Rolltauchens in axiale und/oder umfängliche Schwingungen versetzt wird, um die Kapillarwirkung, insbesondere zwischen den Einzelblechen zu steigern bzw. zu beschleunigen.

10. Verfahren zur Fixierung von Permanentmagneten (9) in Rotoren (4) permanenterregter Synchronmaschinen nach einem der vorhergehenden Ansprüche, **dadurch gekenn- zeichnet**, dass eine Temperierung der Blechpakete (6) und/oder Teilblechpakete (47) und/oder des Klebers (47) zur Optimierung des Klebeprozesses angewandt wird, insbesondere 40-80°C am Blechpaket (6), vorzugsweise 60°C.

11. Rotor (4) einer permanenterregten Synchronmaschine mit vergrabenen Permanentmagneten (9) hergestellt nach einem Verfahren der Ansprüche 1 bis 10, **dadurchgekenn-zeichnet**, dass die Ausnehmungen (11), von dem Volumen der Permanentmagnete (9) abgesehen, mit Kleber (47) gefüllt sind und ein radial vorbestimmter außenliegender Bereich der Einzelbleche (5) verklebt ist.

12. Permanenterregte Synchronmaschine mit einem Rotor (4) nach Anspruch 11.

13. Kompressoren, Lüfter, Pumpen mit einem Antrieb, der zumindest eine permanenterregte Synchronmaschine nach Anspruch 12 aufweist.
